# FASCICULE DE BREVET EUROPEEN

(11) **EP 3 995 936 B1**
(45) Date de publication et mention de la délivrance du brevet: **04.09.2024**
(21) Numéro de dépôt: 21206553.6
(22) Date de dépôt: 04.11.2021
(51) Int. Cl.: G06F 3/01, B60K 35/10, B60K 35/25

(54) **ACTIONNEUR HAPTIQUE POUR SURFACE TACTILE**
HAPTISCHES STELLGLIED FÜR BERÜHRUNGSEMPFINDLICHE OBERFLÄCHE
HAPTIC ACTUATOR FOR TOUCH-SENSITIVE SURFACE

(30) Priorité: 10.11.2020 FR 2011542
(43) Date de publication de la demande: 11.05.2022
(73) Titulaire: Valeo Comfort and Driving Assistance, 94000 Créteil (FR)
(72) Inventeur: BETOULLE, Quentin, 94000 Créteil (FR); EL OUARDI, Nour Eddine, 94000 Créteil (FR); COTTAREL, Bruno, 94000 Créteil (FR); WANIR, Said, 94000 Créteil (FR)
(74) Mandataire: Delplanque, Arnaud

(56) Documents cités:
- EP-A2- 2 244 167
- CN-U- 208 337 281
- US-A1- 2019 334 076

## Description

### DOMAINE TECHNIQUE AUQUEL SE RAPPORTE L'INVENTION

La présente invention concerne de manière générale le domaine des actionneurs haptiques.

Elle concerne plus particulièrement un actionneur haptique utilisé pour supporter une surface tactile.

### ARRIERE-PLAN TECHNOLOGIQUE

Dans de nombreux véhicules, l'ajustement des paramètres de conduite (tels que ceux relatifs aux systèmes de navigation ou au régulateur de vitesse) se fait par l'intermédiaire d'une surface tactile. Les trois principales technologies pour détecter la position d'un doigt sur une surface sont les technologies capacitives, résistives et optiques.

Les surfaces tactiles conventionnelles présentes dans les véhicules peuvent également détecter, en plus de la position du doigt, la force exercée par ce dernier sur la surface. Cette caractéristique permet notamment d'empêcher le déclenchement intempestif de fonctions. De plus, dans le cadre de surfaces tactiles intégrant un retour haptique, la mesure de force permet aussi de calibrer le retour haptique (par exemple la sensation de vibration de la surface sous le doigt) pour qu'il soit perçu le mieux possible par l'utilisateur.

Il existe un actionneur haptique comprenant un stator, une partie mobile et au moins un élément élastique, ledit stator comprenant un enroulement de fil électrique formant une bobine étant apte à produire un champ magnétique lorsqu'un courant parcourt le fil électrique, et un circuit magnétique qui enveloppe en partie ladite bobine, ladite partie mobile étant au moins en partie réalisée en matériau ferromagnétique de manière à être attirée par le champ magnétique, ledit élément élastique étant interposé entre le circuit magnétique et la partie mobile de manière à repousser la partie mobile lorsque celle-ci est attirée vers le stator par le champ magnétique.

Il est possible de mesurer la distance entre la partie mobile et le stator (et donc indirectement de la force exercée sur la surface tactile) de façon capacitive ou inductive.

Dans un tel actionneur, la surface tactile peut être mise en mouvement lorsqu'un courant parcourt le fil électrique de la bobine qui génère alors un champ magnétique, ce champ magnétique attirant la partie mobile. L'élément élastique est alors comprimé et exerce en retour une force de rappel qui tend à repousser la partie mobile. L'utilisation d'une onde de courant produit une vibration de la surface déterminée par la forme de l'onde de courant. La vibration (ou retour haptique) peut par exemple être déclenchée lorsqu'une valeur seuil de force est dépassée.

Les documents EP2244167A2, CN 208337281U, WO201457622A1 décrivent un dispositif haptique.

### PRESENTATION DE L'INVENTION

Dans ce contexte, on propose selon l'invention un actionneur haptique tel que défini ci-dessus, dans lequel ledit élément élastique est chargé en particules magnétiques.

Ainsi, grâce à l'invention, des propriétés magnétiques sont apportées à l'élément élastique. La présence des particules magnétiques augmente la perméabilité magnétique de l'élément élastique, ce qui améliore la circulation d'un champ magnétique entre la partie mobile et le stator. Pour un champ magnétique donné généré par la bobine, une meilleure circulation du champ magnétique se caractérise par une intensité du champ magnétique plus élevée au niveau de la partie mobile.

En conséquence, pour un courant électrique donné, la force exercée sur la partie mobile est plus grande, ce qui permet une vibration plus importante de la surface tactile. La sensation tactile est donc plus nette et plus franche pour l'utilisateur.

De plus, d'une manière respective, une plus grande perméabilité magnétique ou une plus grande permittivité de l'élément élastique augmente la sensibilité de la mesure de la force exercée sur la surface tactile, respectivement de façon inductive ou de façon capacitive que de façon inductive.

De façon préférentielle, l'enroulement de fil électrique se fait autour d'un axe et la bobine possède deux bords d'extrémité axiale, la partie mobile faisant face à l'un des bords d'extrémité axiale.

Par ailleurs, pour améliorer encore la circulation du champ magnétique, on peut prévoir que le circuit magnétique soit interrompu de façon à former un entrefer interne et un entrefer externe entre le circuit magnétique et la partie mobile.

On peut alors prévoir que l'élément élastique comprenne une partie élastique externe, se situant au niveau de l'entrefer externe, et une partie élastique interne, se situant au niveau de l'entrefer interne.

Ainsi, le champ magnétique circule d'autant plus au niveau des entrefers dans la direction axiale et donc d'autant plus dans la partie mobile.

D'autres caractéristiques non limitatives et avantageuses de l'actionneur haptique conforme à l'invention, prises individuellement ou selon toutes les combinaisons techniquement possibles, sont les suivantes :
- l'élément élastique chargé en particules magnétiques a une perméabilité magnétique globale supérieure à 10 ;
- les particules magnétiques comprennent au moins un matériau ferromagnétique sélectionné dans le groupe comprenant l'argent, le fer, le cuivre, le nickel, le cobalt, le carbone et les alliages et les oxydes de ces matériaux ;
- les particules magnétiques ont une taille caractéristique comprise entre 10 et 200 µm ;
- le taux de remplissage volumique de l'élément élastique en particules magnétiques est compris entre 40 % et 90 % ;
- l'élément élastique comprend un des matériaux suivant : le silicone, le caoutchouc, un polymère ;
- l'élément élastique est un polymère de dureté comprise entre 10 ShA et 100 ShA ;
- le module d'Young de l'élément élastique est inférieur à 5 GPa ;
- le circuit magnétique est réalisé dans un matériau magnétique à faible hystérésis pour assurer l'annulation du champ magnétique quand la circulation du courant est stoppée dans la bobine ;
- une tige est fixée au stator de façon à ce que la partie mobile puisse coulisser autour de ladite tige (la tige étant de préférence agencé au centre du stator au niveau de son axe) ;
- le circuit magnétique s'étend sur une longueur supérieure à la longueur axiale de la bobine en direction de la partie mobile de façon à former une rainure qui a pour fond l'extrémité de la bobine et pour côtés le circuit magnétique ;
- un joint élastique est disposé entre l'élément élastique et la bobine, au niveau de ladite rainure, de manière à maintenir la bobine fixe dans le stator ;
- l'élément élastique possède une rainure en vis-à-vis de ladite rainure formée dans le stator ;
- un circuit électrique est agencé entre le stator et la partie mobile de manière à réaliser une mesure capacitive de la distance entre le stator et la partie mobile ;
- un circuit électrique est connecté à la bobine de manière à réaliser une mesure inductive de la distance entre le stator et la partie mobile.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en coupe d'un actionneur haptique selon un premier mode de réalisation de l'invention ;
[Fig. 2] est une vue schématique en coupe d'un actionneur haptique selon un deuxième mode de réalisation de l'invention.

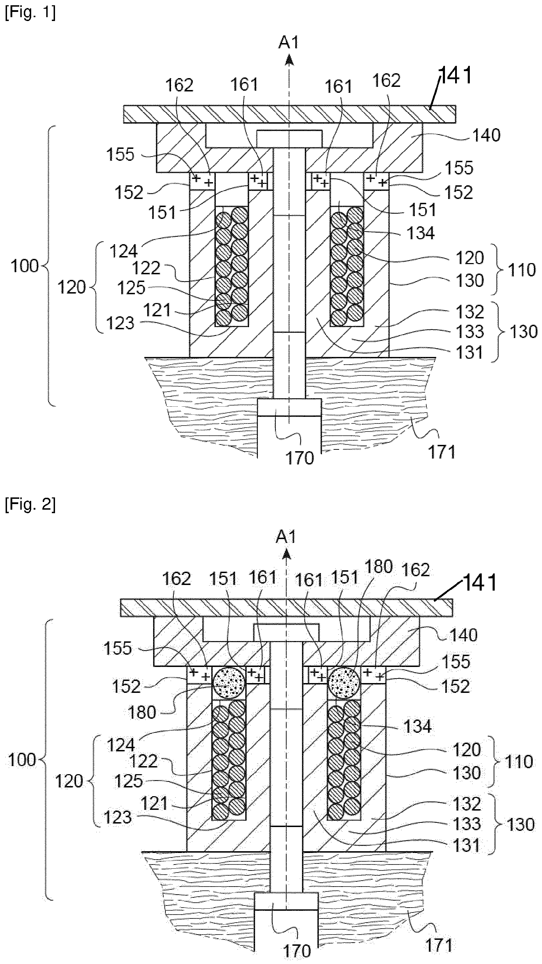

Sur les figures 1 et 2, on a représenté deux modes de réalisation d'un actionneur haptique 100.

Dans ces deux modes de réalisation il s'agit d'un actionneur haptique 100 pour surface tactile comprenant un stator 110, une partie mobile 140 solidaire d'une surface tactile 141, et un élément élastique 151, 152 interposé entre le stator 110 et la partie mobile 140.

En préliminaire on notera que les éléments identiques ou similaires des différents modes de réalisation de l'invention représentés sur les différentes figures seront, dans la mesure du possible, référencés par les mêmes signes de références et ne seront pas décrits à chaque fois.

Quel que soit le mode de réalisation, le stator 110 comprend un enroulement d'un fil électrique 125, autour d'un axe A1, formant une bobine 120. Par rapport à cet axe A1, la bobine 120 possède une surface interne 121, une surface externe 122 et deux bords d'extrémité axiale 123, 124 situées de part et d'autre de la bobine 120.

Comme le montre par exemple la figure 1, la bobine 120 est enveloppée d'un circuit magnétique 130. Le circuit magnétique 130 appartient au stator 110. Le circuit magnétique 130 est conçu pour guider le champ magnétique produit par la bobine 120 lorsque celle-ci est parcourue par un courant électrique. Le circuit magnétique 130 comprend une partie interne 131 épousant la surface interne 121 de la bobine 120 et une partie externe 132 épousant la surface externe 122 de la bobine 120. La partie interne 131 entoure l'axe A1 et est entourée par la bobine 120. La partie externe 132 entoure la bobine 120. Les parties interne 131 et externe 132 sont reliées l'une à l'autre au niveau du bord d'un bord extrémité axiale 123 de la bobine 120 par une partie d'extrémité 133. En revanche, les parties internes 131 et externe 132 ne sont pas reliées au niveau du bord d'extrémité 124, opposé à la partie d'extrémité 133. Le circuit magnétique 130 est discontinu au niveau du bord d'extrémité axiale 124 de la bobine 120, cette extrémité est appelée extrémité libre 124.

Le champ magnétique produit par la bobine 120 (lorsque le fil électrique 125 formant la bobine 120 est parcouru par un courant électrique) circule dans la même direction mais dans un sens opposé respectivement dans les parties interne 131 et externe 132 du circuit magnétique 130.

La partie mobile 140 est situé en vis-à-vis de l'extrémité libre 124 de la bobine 120. La partie mobile 140 est liée de façon rigide à la surface tactile 141. La surface tactile 141 peut par exemple être un écran à cristaux liquide par exemple de type transistor en couche mince (TFT de l'anglais « Thin Film Transistor »). On peut aussi prévoir que la partie mobile 140 soit constituée par une partie d'un boîtier de protection de la surface tactile 141.

La partie mobile 140 est conçue pour être attirée vers le stator 110 par le champ magnétique de la bobine 120. La partie mobile 140 est donc de préférence réalisée dans un matériau ferromagnétique.

En pratique, une tige 142, d'axe A1, est fixée au stator 110. La partie mobile 140 entoure la tige 142 et peut coulisser autour de la tige 142. La tige 142 garantit ainsi que le mouvement de la partie mobile 140 est un mouvement de translation, selon l'axe A1, par rapport au stator 110.

Un espace libre 143 est ménagé entre la partie mobile 140 et la surface tactile 141. La tige 142 est élargie au niveau de cet espace libre 143 pour former une butée 144.

La discontinuité du circuit magnétique 130 mentionnée ci-dessus définit deux entrefers, à savoir un entrefer interne 161 et un entrefer externe 162, se situant respectivement entre la partie interne 131 du circuit magnétique 130 et la partie mobile 140 et entre la partie externe 132 du circuit magnétique 130 et la partie mobile 140. Les entrefers 161, 162 sont situés de part et d'autre de l'extrémité libre 124 de la bobine 120.

Avantageusement, le circuit magnétique 130 est réalisé dans un matériau magnétique à faible hystérésis. Ceci permet une annulation rapide du champ magnétique lorsque le courant est coupé. La partie mobile 140 peut donc être repoussée plus rapidement, le retour haptique est amélioré.

Comme le montre la figure 1, un élément élastique 151, 152 est interposé entre le circuit magnétique 130 et la partie mobile 140. L'élément élastique 151, 152 occupe, en outre, l'entrefer interne 161 et l'entrefer externe 162. L'élément élastique 151, 152 occupe également l'espace entre les entrefers 161, 162.

L'élément élastique 151, 152 comprend un des matériaux suivants : le silicone, le caoutchouc, un polymère. De préférence, l'élément élastique 151, 152 est conçu en silicone. Le silicone est un matériau peu coûteux et facile à mettre en forme. De plus ses propriétés, par exemple son module d'Young, peuvent être facilement ajustées.

De façon remarquable, l'élément élastique 151, 152 est chargé de particules magnétiques 155, ce qui augmente sa perméabilité magnétique. L'élément élastique 151, 152 comprend alors des particules métalliques 155 dans une matrice en silicone ou en caoutchouc ou en polymère.

Pour bien percevoir l'avantage que procure une perméabilité magnétique élevée, il convient d'expliciter le fonctionnement de l'actionneur haptique 100, à la fois pour faire vibrer la surface tactile 141 (par exemple pour le retour haptique) et à la fois pour mesurer la force exercée sur la surface tactile 141 par l'intermédiaire d'une mesure de la distance entre le stator 110 et la partie mobile 140, c'est-à-dire une mesure de la longueur des entrefers 161, 162.

Pour faire vibrer la surface tactile 141 l'actionneur haptique 100 fonctionne de la manière suivante. Un courant électrique est injecté dans la bobine 120 ce qui génère un champ magnétique. Le champ magnétique circule dans le circuit magnétique 130. Dans les entrefers 161, 162, le champ magnétique circule dans l'élément élastique 151, 152. Le champ magnétique circule ensuite dans la partie mobile 140 ce qui a pour effet de l'aimanter. La partie mobile 140 est alors attirée vers le stator 110, ce qui entraine un déplacement de la surface tactile 141 et une compression de l'élément élastique 151, 152. Une fois le courant électrique coupé et le champ magnétique annulé, l'élément élastique 151, 152 repousse la partie mobile 140 vers sa position d'équilibre où elle se trouve au contact de la butée 144.

On comprend alors qu'augmenter la perméabilité magnétique de l'élément élastique 151, 152 grâce aux particules magnétiques 155 dont il est chargé augmente la circulation du champ magnétique dans les entrefers 161, 162 et par conséquent au niveau de la partie mobile 140. Cela signifie que l'intensité du champ magnétique dans la partie mobile 140 est augmentée, l'aimantation de la partie mobile 140 est donc plus grande et la force exercée par le stator 110 sur la partie mobile 140 est plus importante. La vibration de la surface tactile 141 est donc de plus grande amplitude.

L'actionneur haptique 100 permet également de mesurer la force exercée par l'utilisateur sur la surface tactile 141 par l'intermédiaire d'une mesure de la distance entre la partie mobile 140 et le stator 110, soit manière capacitive soit de manière inductive.

Une mesure de type capacitive peut être réalisée grâce à un circuit électrique agencé entre le stator 110 et la partie mobile 140. Le stator 110 et la partie mobile 140 forment alors une paire d'électrodes se faisant face. Le circuit électrique permet de mesurer la capacité du condensateur constitué de ces deux électrodes et dont la capacité est déterminée par la surface des électrodes, la distance entre la partie mobile 140 et le stator 110, et la permittivité du milieu entre la partie mobile 140 et le stator 110, c'est-à-dire celle de l'élément élastique 151, 152. La mesure de la capacité permet de déterminer la distance entre la partie mobile 140 et le stator 110.

La présence de particules métalliques 155 dans l'élément élastique 155 augmente la capacité équivalente du condensateur pour qu'elle se situe dans un intervalle de valeurs déterminé simple à mesurer lors du déplacement la partie mobile 140.

Pour une mesure de type inductive, un circuit électrique est connecté à la bobine 120 pour mesurer l'inductance de la bobine 120. La présence d'un corps conducteur, ici la partie mobile 140, dans le voisinage de la bobine 120 modifie son inductance. Cette modification de l'inductance dépend de la distance entre la partie mobile 140 et le stator 110 et elle d'autant plus importante que cette distance est petite. Une mesure de l'inductance de la bobine 120 permet donc déterminer la distance entre la partie mobile 140 et le stator 110.

Une perméabilité magnétique de l'élément élastique 140 augmentée rend l'influence de la partie mobile 140 sur l'inductance de la bobine 120 plus grande. Une faible variation de distance est donc plus facilement mesurable à travers la variation d'inductance. La mesure de la distance est donc plus sensible.

Pour les deux types de mesure, capacitive et inductive, une calibration permet de déduire de la distance entre la partie mobile 140 et le stator 110, la force exercée sur la partie mobile 140.

Charger l'élément élastique 151, 152 en particules magnétiques 155 permet donc d'améliorer la circulation du champ magnétique et également d'augmenter la sensibilité de la mesure de la force exercée sur la surface tactile 141.

La fonction de ces particules magnétiques 155 est ainsi d'améliorer la circulation du champ magnétique dans les entrefers 161, 162. Elles sont réalisées dans des matériaux dont l'aimantation s'aligne (même direction et même sens) avec le champ magnétique par lequel ils sont traversés. Les matériaux choisis pour réaliser ses particules présentent une susceptibilité magnétique positive. Autrement dit, ce sont des matériaux paramagnétiques. De préférence ces matériaux sont ferromagnétiques pour canaliser encore plus le champ magnétique. On entend par « canaliser » de faciliter la circulation du champ magnétique dans une direction donnée.

En pratique, ces particules magnétiques 155 sont des métaux ou des alliages de métaux car leur coût de fabrication est faible et leur stabilité est grande.

Avantageusement, les particules magnétiques 155 sont réalisées en fer, argent, cuivre, cobalt, nickel, carbone ou dans des alliages de ces métaux. En effet, ces matériaux possèdent une grande susceptibilité magnétique, ce qui les rend particulièrement intéressants. Ces métaux peuvent également être utilisés sous forme d'oxyde.

Il est préférable d'utiliser un élément élastique 151, 152 dont la perméabilité magnétique globale est supérieure à 10 de façon à canaliser efficacement le champ magnétique.

Avantageusement, les particules magnétiques 155 ont une taille caractéristique comprise entre 10 et 200 µm. Il est connu que les particules de grande taille ont de meilleures propriétés magnétiques car elles ont moins de défauts. Néanmoins, des particules de trop grande taille peuvent conduire à des problèmes d'inhomogénéité lors du mélange des particules avec la matrice de l'élément élastique 151, 152. De plus, étant donnée la taille de l'élément élastique 151, 152 (par exemple quelques millimètres d'épaisseur), des particules de taille trop importante limiteraient son élasticité.

Le taux de remplissage de l'élément élastique 151, 152 en particules magnétiques 155 impacte fortement ses performances magnétiques et mécaniques. Un taux de remplissage trop faible ne confère pas à l'élément élastique 151, 152 une perméabilité magnétique suffisante, mais un taux de remplissage trop élevé nuit à sa cohésion. Avantageusement, le taux de remplissage volumique de l'élément élastique 151, 152 en particules magnétiques 155 est compris entre 40 % et 90 %.

Ici, pour des raisons de simplicité de fabrication, les particules magnétiques 155 sont globalement sphériques. En variantes, les particules magnétiques 155 pourraient avoir une forme anisotrope et leur plus grande dimension serait orientée dans le long de l'axe A1. Cette orientation augmenterait la perméabilité magnétique de l'élément élastique 151, 152 dans la direction axiale.

On décrit à présent en détail le premier mode de réalisation de l'invention qui est illustré en figure 1.

Ici, la bobine 120 est un solénoïde d'axe A1. Les partie interne 131, externe 132 et d'extrémité 133 du circuit magnétique ont toutes la forme d'un cylindre percé de façon circulaire le long de son axe longitudinal. Les parties interne 131, externe 132 et d'extrémité 133 du circuit magnétique 130 possèdent le même axe longitudinal A1 que la bobine 120. Les parties interne 131 et externe 132 s'étendent au-delà, selon l'axe A1, de la bobine 120 au niveau de l'extrémité libre 124, de façon à former une rainure 134. La rainure 134 a pour fond l'extrémité libre 124 de la bobine 120 et pour côtés le circuit magnétique 130. Plus précisément, la rainure 134 a pour côtés respectifs la partie interne 131 d'une part et la partie externe 132 d'autre part.

En variante, les parties interne 131 et externe 132 pourraient avoir la même longueur, selon l'axe A1, que la bobine 120.

Comme le montre par exemple la figure 1, la partie mobile 140 a une base de la forme d'un disque avec des jonctions réparties de façon régulière sur le pourtour du disque pour supporter la surface tactile 141.

On peut prévoir que la partie mobile 140 possède au moins deux plans de symétrie contenant l'axe A1, de façon à être attirée vers le stator 110 de façon équilibrée.

Comme illustré en figure 1, l'élément élastique comprend ici une partie élastique externe 152 et une partie élastique interne 151. La partie élastique externe 152 occupe, au moins en partie, l'entrefer externe 162. La partie élastique interne 151 occupe, au moins en partie, l'entrefer interne 161.

En variante, la partie élastique externe et la partie élastique interne pourraient également occuper une partie de la zone située entre les entrefers.

La partie élastique externe 152 est ici distincte de la partie élastique interne 151. De plus, elles sont ici situées à distance l'une de l'autre. Cela signifie qu'elles ne sont pas en contact.

Ici, la partie élastique externe 152 et la partie élastique interne 151 sont toutes deux chargées en particules magnétiques. Ceci assure une différence de perméabilité magnétique optimale entre le milieu se trouvant dans les entrefers interne 161 et externe 162 et le milieu se trouvant entre les entrefers 161, 162. En effet, aucune partie de l'élément élastique 151, 152 ne se situe entre les entrefers 161, 162. En d'autres termes, l'espace se situant entre les entrefers 161, 162 est dépourvu de particules magnétiques 155.

Par conséquent la circulation du champ magnétique est amplifiée dans les entrefers 161, 162 en direction de la partie mobile 140, au détriment d'une circulation du champ magnétique allant d'un entrefer à l'autre. Les performances de l'actionneur haptique 100 sont donc améliorées par rapport au premier mode de réalisation.

Ici, la partie élastique externe 152 est située dans l'entrefer externe 162. Elle a une forme de cylindre aplati percé le long de l'axe A1 et a une section orthoradiale rectangulaire.

Comme le montre la figure 1, le diamètre intérieur de la partie élastique externe 152 est égal au diamètre externe de la bobine 120 et son diamètre extérieur est égale au diamètre extérieur de la partie externe 132 du circuit magnétique 130. En variante, le diamètre interne de la partie élastique externe pourrait être supérieur au diamètre externe de la bobine et son diamètre extérieur pourrait être supérieur ou inférieur au diamètre extérieur de la partie externe du circuit magnétique.

La partie élastique interne 151 est située au niveau de l'entrefer interne 161. Elle a une forme de cylindre aplati percé le long l'axe A1 et a une section orthoradiale rectangulaire. Le diamètre de la partie élastique interne 151 est inférieur au diamètre du partie élastique externe 152.

La partie élastique externe 152 et la partie élastique interne sont placées de façon concentrique autour de l'axe A1. La partie élastique interne 151 se situe à l'intérieur de la partie élastique externe 152.

Le diamètre extérieur de la partie élastique interne 151 est égal au diamètre intérieur de la bobine 120. En variante, son diamètre extérieur pourrait être inférieur au diamètre intérieur de la bobine. Son diamètre intérieur est suffisant pour permettre à la tige 142 de coulisser librement dans l'axe du stator 110.

Disposer la partie élastique externe 152 et la partie élastique interne 151 de cette façon assure que l'espace se situant entre les entrefers 161, 162 est dépourvu de particules magnétiques 155. Par conséquent, la perméabilité magnétique est élevée dans les entrefers 161, 162 et très faible d'un entrefer à l'autre.

Ainsi, en fonctionnement, la circulation du champ magnétique est très efficace au niveau des entrefers 161, 162 dans la direction axiale et la circulation du champ magnétique est très faible dans le sens radial entre les entrefers 161, 162.

La rainure 134 empêche l'élément élastique 151, 152 d'être en contact avec la bobine 120. Ceci permet de ne pas court-circuiter le circuit magnétique 130. L'élément élastique 151, 152 est donc en contact avec la partie mobile 140, la partie interne 131 et la partie externe 132 du circuit magnétique 130.

Pour obtenir un retour haptique efficace, c'est-à-dire une vibration plus rapide et de plus grande amplitude, le retour à la position d'équilibre de la surface tactile 141 doit être prompt. Pour cela la force de rappel, lorsque l'élément élastique 151, 152 est compressé et repousse la partie mobile 140, doit être importante. Par conséquent, il est préférable d'utiliser un élément élastique 151, 152 dont la rigidité est élevée. Ici, l'élément élastique possède une dureté comprise entre 10 ShA et 100 ShA. Ici, l'élément élastique 151, 152 possède un module d'Young inférieur à 5 GPa.

Ici, le stator 110 est fixé à une base 171, par exemple le tableau de bord d'un véhicule, par l'intermédiaire d'une vis 170. La vis 170 passe par l'axe du stator 110, il se situe en vis-à-vis de la tige 142. La vis 170 est réalisée dans un matériau amagnétique pour ne pas perturber le champ magnétique. La vise 170 est fixe à la fois par rapport au stator 110 et pas rapport à la base 171. En variante, le stator 110 pourrait ne pas posséder de vis et serait directement fixé à la base 171.

Dans un deuxième mode de réalisation représenté en figure 2, un joint 180 annulaire est disposé dans la rainure 134. Le joint 180 est ici au contact à la fois de l'élément élastique 151, 152, au niveau de ses bords latéraux, de l'extrémité libre 124 de la bobine 120 et de la partie mobile 140. Sa fonction est d'assurer le maintien de la bobine 120 dans le circuit magnétique 130 en plaquant la bobine 120 contre la partie d'extrémité 133 du circuit magnétique 130.

Le joint 180 est élastique pour s'adapter facilement au volume laissé libre pas la rainure 134 et entre les entrefers 161, 162 et pour pouvoir compenser de petites déformations dues à des jeux entre les pièces, notamment lorsque l'actionneur 100 est en fonctionnement.

Le joint 180 est conçu dans un matériau amagnétique pour ne pas court-circuiter le circuit magnétique 130. En effet, un joint magnétique canaliserait une partie du champ magnétique qui ne circulerait alors plus dans la partie mobile 140.

Les autres caractéristiques et variantes possibles de l'actionneur sont identiques à celle décrites dans le premier mode de réalisation.

La présente invention n'est nullement limitée aux modes de réalisation décrits et représentés, mais l'homme du métier saura y apporter toute variante conforme à l'invention.

## Revendications

1. Actionneur haptique (100) pour surface tactile (141) comprenant un stator (110), une partie mobile (140) et au moins un élément élastique (151, 152), ledit stator (110) comprenant un enroulement de fil électrique (125) formant une bobine (120) étant apte à produire un champ magnétique lorsqu'un courant parcourt le fil électrique (125), et un circuit magnétique (130) qui enveloppe en partie ladite bobine (120), ladite partie mobile (140) étant au moins en partie réalisée en matériau ferromagnétique de manière à être attirée par le champ magnétique entraînant un déplacement de la surface tactile (141) et une compression de l'élément élastique (151, 152), ledit élément élastique (151, 152) étant interposé entre le circuit magnétique (130) et la partie mobile (140) de manière à repousser la partie mobile (140) lorsque celle-ci est attirée vers le stator (110) par le champ magnétique,
**caractérisé en ce que** ledit élément élastique (151, 152) est chargé en particules magnétiques (155).

2. Actionneur haptique (100) selon la revendication 1, dans lequel l'élément élastique (151, 152) chargé en particules magnétiques (155) à une perméabilité magnétique globale supérieure à 10.

3. Actionneur haptique (100) selon l'une des revendications 1 à 2, dans lequel les particules magnétiques (155) comprennent au moins un matériau ferromagnétique sélectionné dans le groupe comprenant l'argent, le fer, le cuivre, le nickel, le cobalt, le carbone et les alliages et les oxydes de ces matériaux.

4. Actionneur haptique (100) selon l'une des revendications 1 à 3, dans lequel les particules magnétiques (155) ont une taille caractéristique comprise entre 10 et 200 µm.

5. Actionneur haptique (100) selon l'une des revendications 1 à 4, dans lequel le taux de remplissage volumique de l'élément élastique (151, 152) en particules magnétiques est compris entre 40 % et 90 %.

6. Actionneur haptique (100) selon l'une des revendications 1 à 5, dans lequel l'élément élastique (151, 152) comprend un des matériaux suivants : le silicone, le caoutchouc, un polymère.

7. Actionneur haptique (100) selon l'une des revendications 1 à 5, dans lequel l'élément élastique (151, 152) est un polymère de dureté comprise entre 10 ShA et 100 ShA.

8. Actionneur haptique (100) selon l'une des revendications 1 à 7, dans lequel le module d'Young de l'élément élastique (151, 152) est inférieur à 5 GPa.

9. Actionneur haptique (100) selon l'une des revendications 1 à 8, dans lequel le circuit magnétique (130) est réalisé dans un matériau magnétique à faible hystérésis pour assurer l'annulation du champ magnétique quand la circulation du courant est stoppée dans la bobine (120).

10. Actionneur haptique (100) selon l'une des revendications 1 à 9, dans lequel une tige (142) est fixée au stator (110) de façon à ce que la partie mobile (140) puisse coulisser autour de ladite tige (142).

11. Actionneur haptique (100) selon l'une des revendications 1 à 10, dans lequel le circuit magnétique (130) s'étend sur une longueur supérieure à la longueur axiale de la bobine (120) en direction de la partie mobile (140) de façon à former une rainure (134) qui a pour fond l'extrémité (124) de la bobine (120) et pour côtés le circuit magnétique (130).

12. Actionneur haptique (100) selon la revendication 11, dans lequel l'élément élastique (151, 152) possède une rainure en vis-à-vis de la rainure (134) formée dans le stator (110).

13. Actionneur haptique (100) selon l'une des revendications 11 à 12, dans lequel un joint élastique (180) est disposé entre l'élément élastique (151, 152) et la bobine (120), au niveau de la rainure (134), de manière à maintenir la bobine (120) fixe dans le stator (110).

14. Actionneur haptique (100) selon l'une des revendications 1 à 11, dans lequel le circuit magnétique (130) est interrompu de façon à former un entrefer interne (161) et un entrefer externe (162) entre le circuit magnétique (130) et la partie mobile (140).

15. Actionneur haptique (100) selon la revendication 14, dans lequel l'élément élastique (151, 152) comprend une partie élastique externe (152), se situant au niveau de l'entrefer externe (162) et une partie élastique interne (151), se situant au niveau de l'entrefer interne (151).

16. Actionneur haptique (100) selon l'une des revendications 1 à 15, dans lequel un circuit électrique est agencé entre le stator (110) et la partie mobile (140) de manière à réaliser une mesure capacitive de la distance entre le stator (110) et la partie mobile (140).

17. Actionneur haptique (100) selon l'une des revendications 1 à 16, dans lequel un circuit électrique est connecté à la bobine (120) de manière à réaliser une mesure inductive de la distance entre le stator (110) et la partie mobile (140).

## Patentansprüche

1. Haptischer Aktor (100) für eine berührungsempfindliche Fläche (141), umfassend einen Stator (110), einen beweglichen Teil (140) und mindestens ein elastisches Element (151, 152), wobei der Stator (110) eine Wicklung aus elektrischem Draht (125) umfasst, die eine Spule (120) bildet, die geeignet ist, ein Magnetfeld zu erzeugen, wenn ein Strom den elektrischen Draht (125) durchfließt, und einen Magnetkreis (130), der die Spule (120) teilweise umgibt, wobei der bewegliche Teil (140) mindestens teilweise aus ferromagnetischem Material ausgeführt ist, so dass er von dem Magnetfeld angezogen wird, was zu einer Verlagerung der berührungsempfindlichen Fläche (141) und einer Stauchung des elastischen Elements (151, 152) führt, wobei das elastische Element (151, 152) zwischen den Magnetkreis (130) und den beweglichen Teil (140) gesetzt ist, so dass es den beweglichen Teil (140) zurückdrückt, wenn dieser durch das Magnetfeld zu dem Stator (110) hin angezogen wird,
**dadurch gekennzeichnet, dass** das elastische Element (151, 152) mit magnetischen Partikeln (155) gefüllt ist.

2. Haptischer Aktor (100) nach Anspruch 1, wobei das mit magnetischen Partikeln (155) gefüllte elastische Element (151, 152) eine magnetische Gesamtpermeabilität von mehr als 10 hat.

3. Haptischer Aktor (100) nach einem der Ansprüche 1 bis 2, wobei die magnetischen Partikel (155) mindestens ein ferromagnetisches Material umfassen, das aus der Gruppe ausgewählt ist, die Silber, Eisen, Kupfer, Nickel, Kobalt, Kohlenstoff und die Legierungen und die Oxide dieser Materialien umfasst.

4. Haptischer Aktor (100) nach einem der Ansprüche 1 bis 3, wobei die magnetischen Partikel (155) eine charakteristische Größe zwischen 10 und 200 um haben.

5. Haptischer Aktor (100) nach einem der Ansprüche 1 bis 4, wobei der Volumenfüllgrad des elastischen Elements (151, 152) an magnetischen Partikeln zwischen 40 % und 90 % beträgt.

6. Haptischer Aktor (100) nach einem der Ansprüche 1 bis 5, wobei das elastische Element (151, 152) eines der folgenden Materialien umfasst: Silikon, Kautschuk, ein Polymer.

7. Haptischer Aktor (100) nach einem der Ansprüche 1 bis 5, wobei das elastische Element (151, 152) ein Polymer mit einer Härte zwischen 10 ShA und 100 ShA ist.

8. Haptischer Aktor (100) nach einem der Ansprüche 1 bis 7, wobei der Elastizitätsmodul des elastischen Elements (151, 152) weniger als 5 GPa beträgt.

9. Haptischer Aktor (100) nach einem der Ansprüche 1 bis 8, wobei der Magnetkreis (130) aus einem magnetischen Material mit geringer Hysterese ausgeführt ist, um die Aufhebung des Magnetfelds zu gewährleisten, wenn der Fluss des Stroms in der Spule (120) gestoppt wird.

10. Haptischer Aktor (100) nach einem der Ansprüche 1 bis 9, wobei ein Stab (142) an dem Stator (110) befestigt ist, so dass der bewegliche Teil (140) um den Stab (142) herum gleiten kann.

11. Haptischer Aktor (100) nach einem der Ansprüche 1 bis 10, wobei sich der Magnetkreis (130) über eine Länge erstreckt, die größer als die axiale Länge der Spule (120) in Richtung des beweglichen Teils (140) ist, so dass eine Nut (134) gebildet wird, die als Boden das Ende (124) der Spule (120) und als Seitenflächen den Magnetkreis (130) hat.

12. Haptischer Aktor (100) nach Anspruch 11, wobei das elastische Element (151, 152) eine Nut gegenüber der in dem Stator (110) gebildeten Nut (134) hat.

13. Haptischer Aktor (100) nach einem der Ansprüche 11 bis 12, wobei eine elastische Dichtung (180) zwischen dem elastischen Element (151, 152) und der Spule (120), an der Nut (134), so angeordnet ist, dass die Spule (120) in dem Stator (110) festgehalten wird.

14. Haptischer Aktor (100) nach einem der Ansprüche 1 bis 11, wobei der Magnetkreis (130) unterbrochen ist, so dass ein innerer Spalt (161) und ein äußerer Spalt (162) zwischen dem Magnetkreis (130) und dem beweglichen Teil (140) gebildet werden.

15. Haptischer Aktor (100) nach Anspruch 14, wobei das elastische Element (151, 152) einen äußeren elastischen Teil (152), der an dem äußeren Spalt (162) gelegen ist, und einen inneren elastischen Teil (151), der an dem inneren Spalt (151) gelegen ist, umfasst.

16. Haptischer Aktor (100) nach einem der Ansprüche 1 bis 15, wobei eine elektrische Schaltung zwischen dem Stator (110) und dem beweglichen Teil (140) so eingerichtet ist, dass eine kapazitive Messung des Abstands zwischen dem Stator (110 und dem beweglichen Teil (140) ausgeführt wird.

17. Haptischer Aktor (100) nach einem der Ansprüche 1 bis 16, wobei eine elektrische Schaltung so an die Spule (120) angeschlossen ist, dass eine induktive Messung des Abstands zwischen dem Stator (110 und dem beweglichen Teil (140) ausgeführt wird.

## Claims

1. Haptic actuator (100) for a touch-sensitive surface (141) comprising a stator (110), a movable portion (140) and at least one elastic element (151, 152), said stator (110) comprising a winding of electrical wire (125) forming a coil (120) which is able to produce a magnetic field when a current flows through the electrical wire (125), and a magnetic circuit (130) which partially envelops said coil (120), said movable portion (140) being at least partially made of ferromagnetic material so as to be attracted by the magnetic field causing the touch-sensitive surface (141) to move and the elastic element (151, 152) to be compressed, said elastic element (151, 152) being interposed between the magnetic circuit (130) and the movable portion (140) so as to push back the movable portion (140) when the latter is attracted to the stator (110) by the magnetic field,
**characterized in that** said elastic element (151, 152) is loaded with magnetic particles (155).

2. Haptic actuator (100) according to Claim 1, wherein the elastic element (151, 152) loaded with magnetic particles (155) has an overall magnetic permeability greater than 10.

3. Haptic actuator (100) according to one of Claims 1 and 2, wherein the magnetic particles (155) comprise at least one ferromagnetic material selected from the group comprising silver, iron, copper, nickel, cobalt, carbon and the alloys and the oxides of these materials.

4. Haptic actuator (100) according to one of Claims 1 to 3, wherein the magnetic particles (155) have a characteristic size of between 10 and 200 µm.

5. Haptic actuator (100) according to one of Claims 1 to 4, wherein the volumetric rate of filling of the elastic element (151, 152) with magnetic particles is between 40% and 90%.

6. Haptic actuator (100) according to one of Claims 1 to 5, wherein the elastic element (151, 152) comprises one of the following materials: silicon, rubber, a polymer.

7. Haptic actuator (100) according to one of Claims 1 to 5, wherein the elastic element (151, 152) is a polymer with a hardness of between 10 ShA and 100 ShA.

8. Haptic actuator (100) according to one of Claims 1 to 7, wherein the Young's modulus of the elastic element (151, 152) is less than 5 GPa.

9. Haptic actuator (100) according to one of Claims 1 to 8, wherein the magnetic circuit (130) is made of a low-hysteresis magnetic material in order to ensure that the magnetic field is cancelled out when the flow of current is stopped in the coil (120).

10. Haptic actuator (100) according to one of Claims 1 to 9, wherein a rod (142) is fixed to the stator (110) so that the movable portion (140) can slide around said rod (142).

11. Haptic actuator (100) according to one of Claims 1 to 10, wherein the magnetic circuit (130) extends over a length greater than the axial length of the coil (120) in the direction of the movable portion (140) so as to form a groove (134) which has the end (124) of the coil (120) for a bottom and the magnetic circuit (130) for sides.

12. Haptic actuator (100) according to Claim 11, wherein the elastic element (151, 152) possesses a groove opposite the groove (134) formed in the stator (110).

13. Haptic actuator (100) according to one of Claims 11 and 12, wherein an elastic seal (180) is arranged between the elastic element (151, 152) and the coil (120), at the groove (134), so as to keep the coil (120) fixed in the stator (110).

14. Haptic actuator (100) according to one of Claims 1 to 11, wherein the magnetic circuit (130) is interrupted so as to form an inner air gap (161) and an outer air gap (162) between the magnetic circuit (130) and the movable portion (140) .

15. Haptic actuator (100) according to Claim 14, wherein the elastic element (151, 152) comprises an outer elastic portion (152), situated at the outer air gap (162), and an inner elastic portion (151), situated at the inner air gap (151).

16. Haptic actuator (100) according to one of Claims 1 to 15, wherein an electrical circuit is arranged between the stator (110) and the movable portion (140) so as to capacitively measure the distance between the stator (110) and the movable portion (140).

17. Haptic actuator (100) according to one of Claims 1 to 16, wherein an electrical circuit is connected to the coil (120) so as to inductively measure the distance between the stator (110) and the movable portion (140).
